# EUROPEAN PATENT SPECIFICATION

(11) **EP 1 151 663 B1**
(45) Date of publication and mention of the grant of the patent: **07.07.2004**
(21) Application number: 01201452.8
(22) Date of filing: 20.04.2001
(51) Int. Cl.: A01J 25/11

(54) **Curd-dispensing device and method for dispensing a preshaped block of curd into a container**
Käsebruchbeförderungsvorrichtung und Verfahren zur Beförderung eines vorgeformten Käsebruchblockes in einen Behälter
Dispositif de déchargement de caillé et méthode de déchargement d'un bloc de caillé préformé dans un conteneur

(30) Priority: 02.05.2000 NL 1015086
(43) Date of publication of application: 07.11.2001
(73) Proprietor: Campina Melkunie B.V. Kaasgroep, 5015 BH Tilburg (NL)
(72) Inventor: Van de Ven, Adrianus Johannes Theodorus, 5066 VB Moergestel (NL); Schelle, Cornelis Mathias Antonie, 5171 JT Kaatsheuvel (NL)
(74) Representative: du Pont, Jeroen

(56) References cited:
- EP-A- 0 235 867
- FR-A- 2 326 144
- FR-A- 2 595 199
- FR-A- 2 779 318

## Description

The present invention relates firstly to a curd-dispensing device, comprising a curd storage container with a curd inlet and a curd outlet, which curd outlet comprises a closable dispensing opening, for dispensing a preshaped block of curd from the curd storage container into a container, in particular a cheese mould.

A device of this type is known, for example, from EP-A-0 235 867. In the said device, whey is partially separated from a curd/whey mixture in a perforated column. The underside of this curd-processing column is adjoined by a curd storage container, which comprises a baseplate and a displaceable encircling wall. The content of the curd-processing column is in open communication with the curd storage container. The content of the curd storage container is separated from the remaining curd by cutting. The displaceable wall is pushed off the baseplate onto a delivery plate together with the quantity of curd which has been cut off, also known as a block of curd. Beneath the delivery plate there is a cheese mould which is to be filled. As a result of the delivery plate then being quickly pulled out from underneath the displaceable wall together with the block of curd, the block of curd falls downward out of the displaceable wall and into the cheese mould.

During use, the abovementioned device has certain drawbacks. The fact that the block of curd drops into the cheese mould means that imperfections may occur in the cheese which is ultimately obtained. Firstly, what is known as an "air rim" may form. An air rim is formed by a large number of small air bubbles, in particular in the vicinity of the underside of the cheese. It is assumed that the air rim is formed because the separate curd particles are locally briefly separated from one another when the block of curd is dropped into the cheese mould. As a result, the whey which is situated between the curd particles may escape, after which air occupies the space where the whey used to be. This air is included in the cheese, where it forms the air bubbles known as the air rim. This air rim is considered to be a visual imperfection in the cheese.

Furthermore, the rind becomes very thin at the air rim. As a result, there is a greatly increased risk of damage to the cheese during subsequent handling. Damage to the rind may lead to the formation of mould, also known as "green in the rind", which of course is also undesirable.

In addition, there may be the problem of the block of curd turning slightly while it drops. As a result, the block of curd is incorrectly positioned in the cheese mould, for example is off-centre or is to a certain extent in a skew position.

It is an object of the present invention to provide a solution to the abovementioned problems, and to this end the invention is characterized in that in the vicinity of he dispensing opening the device comprises curd-block guide means with frictional guidance which, when the device is in use, can extend into the container.

The curd-block guide means guide the block of curd while it is being dispensed into the container. The aim is to prevent the block of curd dropping freely and thus reaching an excessive velocity. Limiting the falling velocity counteracts damage to the bottom of the block of curd as far as possible. Moreover, the dispensing takes place more accurately. As long as the block of curd is in contact with the curd-block guide means, the curd-block guide means use friction to influence the velocity of downwards movement of the block of curd. In principle, it is sufficient if the curd-block guide means extend as far as close to the highest point which is taken up by the block of curd in the container after dispensing.

It should at this point be noted that various devices for dispensing a quantity of curd/whey mixture into a container are known in the prior art (cf. for example FR-A-2 595 199, FR-A-2 326 144 and FR-A-2 779 318). However, these do not relate to the dispensing of a preshaped block of curd, as is the case according to the invention, i.e. curd from which at least some of the whey has already been removed. When a quantity of curd which still contains large amounts of whey is being dispensed, the abovementioned problems of an "air rim" and "green in the rind" do not occur, since the fact that the curd/whey mixture is still liquid ensures that the cheese mould is successfully filled uniformly.

Furthermore, it should be noted that the abovementioned known devices do not describe means for guiding a block of curd, thus preventing the block of curd from reaching an excessive dropping velocity, but rather describe means with a funnel function, i.e. for aligning a curd/whey mixture in a container which lies beneath.

Preferably, when the device according to the invention is being used, the curd-block guide means extend as far as close to the base of the container. This ensures that the block of curd is guided optimally during its movement.

In a preferred embodiment of the device according to the invention, the curd-block guide means comprise a collar of flexible material which is present around the dispensing opening. The material of the collar is preferably selected in such a way that it exerts a sufficient braking action without there being any risk of damage to the block of curd. The material advantageously comprises mould netting material for this purpose. The term mould netting material is intended to indicate the material which lines the inside of a cheese mould.

In particular, the curd-block guide means comprise two or more lips which are present around the dispensing opening. These lips may be made from flexible material, while it is also possible for the lips to be attached in a hinged manner in the vicinity of the dispensing opening. The lips define a channel through which the block of curd is guided during dispensing.

In practice, the container will often be a cheese mould. In a cheese mould, the block of curd is often surrounded by a mould netting. The mould netting is used to discharge the remaining whey. The mould netting may, for example, be arranged in the cheese mould before it is filled with the block of curd.

In principle, the dimensions of the curd-block guide means are not subject to any particular limits, provided that they are able to guide the block of curd so as to decelerate it. By way of example, the guide means have at most the same cross section as the block of curd. Preferably, however, the cross section of the curd-block guide means transversely to the intended dispensing direction is smaller than the cross section of the block of curd. In this way, it is possible to ensure optimum contact between the curd-block guide means and the block of curd during dispensing.

It is not necessary for the block of curd to maintain a constant low velocity during the dispensing. It is preferable if the block of curd leaves the curd storage container at a high velocity but then reaches the base of the cheese mould at a low velocity. In a preferred embodiment of the device according to the invention, the curd-block guide means taper in the intended dispensing direction. This shape ensures that the block of curd is decelerated to the desired low final velocity towards the end of the dispensing process.

The invention also relates to a method for dispensing a preshaped block of curd into a container, which method is characterized in that the dispensing takes place with frictional guidance from a curd-block guide means for at least the side of the preshaped block of curd. In this way, the risk of damage to and imperfections in the block of curd is reduced considerably.

The preshaped block of curd is preferably guided substantially as far as the base of the container.

In particular, a cheese mould is used as the container.

The invention will be explained in more detail in the description of the figures which follow, with reference to the appended drawing, in which:
Fig. 1 shows a diagrammatic cross section through a first embodiment of a curd-dispensing device according to the invention; and
Fig. 2 shows a second embodiment of a curd-dispensing device according to the invention in the transverse direction.

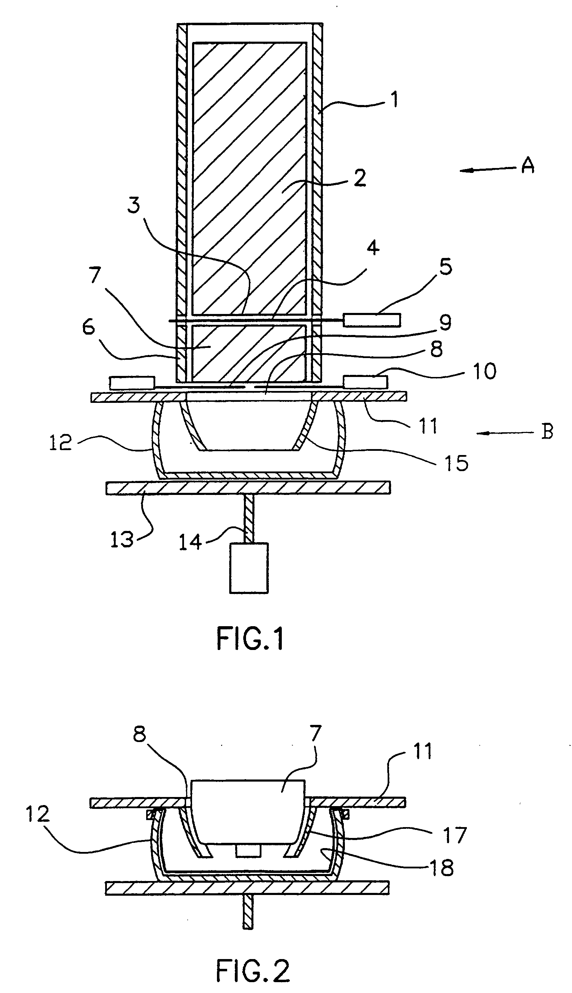

In Fig. 1, A denotes a curd/whey separation column. It comprises a substantially cylindrical container 1 in which there is a quantity of curd/whey mixture 2, and whey-removal means, for example holes, which are not shown. At the opening 3 at the bottom, this column is closed off by a movable blade 4 which can be actuated by blade-actuating means 5.

Beneath the column A there is a curd-dispensing section B. This comprises a curd storage container 6 which holds a quantity of preshaped curd 7 which has been cut off, also known as a block of curd 7. At the underside, the curd storage container 6 has a dispensing opening 8, which can be closed off by means of a movable closure means 9. The closure means 9 may, for example, be designed as a movable plate or as a diaphragm comprising two or more plates. The closure means 9 can be actuated by means of closure-means actuating means 10. The curd storage container 7 and the closure means 9 rest on a support plate 11.

Beneath the dispensing opening 8 there is a cheese mould 12 which is supported by a mould-support plate 13. With the aid of actuating means 14, the mould-support plate 13, with the cheese mould 12 on it, can be pressed against the underside of support plate 11. Curd-block guide means 15, which extend into the cheese mould while it is being filled with curd, are also shown on the support plate 11, in the vicinity of the dispensing opening 8.

The curd/whey separation column A is filled with a curd/whey mixture from the top. As this mixture is moving downwards, whey is extracted from it. The mass of curd which has been thickened in this way is ultimately blocked in the vicinity of the opening 3 of the column A by the movable blade 4, which closes off the column in the at-rest position.

When a quantity of curd is to be delivered, the opening 3 of the column A is opened as a result of the movable blade 4 being moved. The curd mixture moves slowly downwards under the influence of the force of gravity, until it is blocked by the closure means 9. Then, the movable blade 4 is moved back inwards, with the result that a preshaped quantity of curd 7 is cut off the curd/whey mixture 2. This block of curd 7 is situated in the curd storage container 6. The curd storage container and the closure means are supported on the support plate 11.

The block of curd 7 is to be introduced into a cheese mould 12. To minimize the distance over which the block of curd 7 has to be lowered into the cheese mould 12 and therefore the risk of damage, the cheese mould 12 on vessel-support plate 13 is pressed onto the underside of support plate 11 with the aid of actuating means 14. The open top side of the cheese mould 12 is, of course, aligned with the dispensing opening 8.

To introduce the block of curd into the cheese mould, the closure means 9 is opened with the aid of the closure-means actuating means 10. After the closure means 9 has been opened, the block of curd 7 moves downwards through the dispensing opening 8 under the force of gravity. As the block of curd 7 is moving downwards through the dispensing opening 8, it comes into contact with curd-block guide means 15. In the figure, these guide means are designed as an encircling flexible collar around the dispensing opening 8. This collar extends into the cheese mould 12, as far as close to its base. The collar may be made from a suitable plastics material which provides sufficient rigidity for the frictional guidance and is also soft enough not to damage the block of curd. Mould netting material is a particularly suitable material for this purpose.

In constant contact with the curd-block guide means 15, the block of curd 7 moves slowly towards the base of the cheese mould 12. As soon as the block of curd 7 has reached the base of the cheese mould, the filling process is over. With the aid of the actuating means 14, the cheese mould, with the block of curd 7 inside it, can be moved downwards, away from support plate 11.

Figure 2 shows another embodiment of the device according to the invention, but this time while a cheese mould 12 is being filled with a block of curd 7. Identical reference numerals denote corresponding components.

The block of curd 7 has already been partially lowered into the cheese mould 12. It can clearly be seen that the block of curd 7 is in constant frictional contact with the curd-block guide means 17 which extend as far as close to the base of the cheese mould 12. The curd-block guide means are in this case designed as four plastic lips 17, three of which are shown. These lips 17 may be made from a flexible material or from a substantially rigid material, in which case the lips are hingedly attached to support plate 11. The lips 17 guide the block of curd 7, under frictional control, towards the base of the cheese mould 12. The risk of dispensing in an off-centre or skew position is considerably reduced as a result.

A mould netting is denoted by 18. This netting is situated inside the cheese mould 12 and in principle lines its base and its walls. After the cheese mould has been filled with the block of curd 7, the block of curd is surrounded by the mould netting 18 at the bottom and at the sides.

The device according to the invention may be a separate dispensing device which forms part of a cheese preparation device. Furthermore, the device may be fixedly connected to a curd-processing column, as in Figure 1. The only essential factor for the invention is that during dispensing use is made of curd guide means, in other words that a block of curd is introduced into the cheese mould under frictional guidance.

## Claims

1. Curd-dispensing device, comprising a curd storage container (6) with a curd inlet and a curd outlet, which curd outlet comprises a closable dispensing opening (8), for dispensing a preshaped block of curd (7) from the curd storage container (6) into a container (12), in particular a cheese mould, **characterized in that** in the vicinity of the dispensing opening (8) the curd-dispensing device comprises curd-block guide means (15; 17) with frictional guidance which, when the curd-dispensing device is in use, can extend into the container (12).

2. Curd-dispensing device according to claim 1, **characterized in that** the curd-block guide means (15; 17), when the device is being used, can extend as far as close to the base of the container (12).

3. Curd-dispensing device according to claim 1 or 2, **characterized in that** the curd-block guide means (15; 17) comprise a collar (15) of flexible material which is present around the dispensing opening (8).

4. Curd-dispensing device according to claim 3, **characterized in that** the collar (15) comprises mould netting material.

5. Curd-dispensing device according to claim 1 or 2, **characterized in that** the curd-block guide means (17) comprise two or more lips which are present around the dispensing opening (8).

6. Curd-dispensing device according to one or more of the preceding claims, **characterized in that** the curd-block guide means (15; 17) taper in the intended dispensing direction.

7. Method for dispensing a preshaped block of curd (7) into a container (12), **characterized in that** the dispensing takes place with frictional guidance from a curd-block guide means (15; 17) for at least the side of the preshaped block of curd (7).

8. Method according to claim 7, **characterized in that** the preshaped block of curd (7) is guided substantially as far as the base of the container (12).

9. Method according to claim 7 or 8, **characterized in that** the container (12) comprises a cheese mould.

## Patentansprüche

1. Quark-Abgabevorrichtung, die einen Quark-Aufbewahrungsbehälter (1) mit einem Quark-Einlass und einem Quark-Auslass umfasst, wobei der Quark-Auslass eine verschließbare Abgabeöffnung (8) zum Abgeben eines vorgeformten Blocks aus Quark (7) aus dem Quark-Aufbewahrungsbehälter (6) in einen Behälter (12), insbesondere eine Käseform, umfasst, **dadurch gekennzeichnet, dass** in der Nähe der Abgabeöffnung (8) die Quark-Abgabevorrichtung eine Quarkblock-Führungseinrichtung (15; 17) umfasst, die, wenn die Quark-Abgabevorrichtung mit Reibungs-Führung eingesetzt wird, sich in den Behälter (12) hinein erstrecken kann.

2. Quark-Abgabevorrichtung nach Anspruch 1, **dadurch gekennzeichnet, dass** die Quarkblock-Führungseinrichtung (15; 17), wenn die Vorrichtung eingesetzt wird, sich bis zum Boden des Behälters (12) erstrecken kann.

3. Quark-Abgabevorrichtung nach Anspruch 1 oder 2, **dadurch gekennzeichnet, dass** die Quarkblock-Führungseinrichtung (15; 17) einen Bund (15) aus flexiblem Material umfasst, der um die Abgabeöffnung (8) herum vorhanden ist.

4. Quark-Abgabevorrichtung nach Anspruch 3, **dadurch gekennzeichnet, dass** der Bund (15) Form-Netzmaterial umfasst.

5. Quark-Abgabevorrichtung nach Anspruch 1 oder 2, **dadurch gekennzeichnet, dass** die Quarkblock-Führungseinrichtung (17) zwei oder mehr Lippen umfasst, die um die Abgabeöffnung (8) herum vorhanden sind.

6. Quark-Abgabevorrichtung nach einem oder mehreren der vorangehenden Ansprüche, **dadurch gekennzeichnet, dass** sich die Quarkblock-Führungseinrichtung (15; 17) in der beabsichtigten Abgaberichtung verjüngt.

7. Verfahren zum Abgeben eines vorgeformten Blocks aus Quark (7) in einen Behälter (12), **dadurch gekennzeichnet, dass** das Abgeben mit Reibungs-Führung von einer Quarkblock-Führungseinrichtung (15; 17) wenigstens für die Seite des vorgeformten Blocks aus Quark (7) stattfindet.

8. Verfahren nach Anspruch 7, **dadurch gekennzeichnet, dass** der vorgeformte Block aus Quark (7) im Wesentlichen bis zum Boden des Behälters (12) geleitet wird.

9. Verfahren nach Anspruch 7 oder 8, **dadurch gekennzeichnet, dass** der Behälter (12) eine Käseform umfasst.

## Revendications

1. Dispositif de déchargement de caillé, comprenant un conteneur de stockage de caillé (6) doté d'une entrée de caillé et d'une sortie de caillé, laquelle sortie de caillé comprend une ouverture de déchargement (8) pouvant se fermer, pour décharger un bloc de caillé (7) préformé à partir du conteneur de stockage de caillé (6) dans un conteneur (12), en particulier un moule à fromage, **caractérisé en ce qu'**à proximité de l'ouverture de déchargement (8), le dispositif de déchargement de caillé comprend des moyens de guidage (15 ; 17) de bloc de caillé avec un guidage par frottement qui, lorsque le dispositif de déchargement de caillé fonctionne, peut s'étendre jusque dans le conteneur (12).

2. Dispositif de déchargement de caillé selon la revendication 1, **caractérisé en ce que** les moyens de guidage (15 ; 17) de bloc de caillé, lorsque le dispositif est utilisé, peuvent s'étendre jusqu'à proximité de la base du conteneur (12).

3. Dispositif de déchargement de caillé selon la revendication 1 ou 2, **caractérisé en ce que** les moyens de guidage (15 ; 17) de bloc de caillé comprennent un collier (15) en matériau souple qui est présent autour de l'ouverture de déchargement (8).

4. Dispositif de déchargement de caillé selon la revendication 3, **caractérisé en ce que** le collier (15) comprend un matériau grillagé pour moule à fromage.

5. Dispositif de déchargement de caillé selon la revendication 1 ou 2, **caractérisé en ce que** le moyen de guidage (17) de bloc de caillé comprend deux lèvres ou plus qui sont présentes autour de l'ouverture de déchargement (8).

6. Dispositif de déchargement de caillé selon une ou plusieurs des revendications précédentes, **caractérisé en ce que** les moyens de guidage (15 ; 17) de bloc de caillé se rétrécissent progressivement dans la direction de déchargement prévue.

7. Procédé de déchargement d'un bloc de caillé (7) préformé dans un conteneur (12), **caractérisé en ce que** le déchargement à lieu avec un guidage à frottement par les moyens de guidage (15 ; 17) de bloc de caillé, au moins au niveau du côté du bloc de caillé (7) préformé.

8. Procédé selon la revendication 7, **caractérisé en ce que** le bloc de caillé (7) préformé est guidé presque jusqu'à la base du conteneur (12).

9. Procédé selon la revendication 7 ou 8, **caractérisé en ce que** le conteneur (12) comprend un moule à fromage.
